# EUROPÄISCHE PATENTSCHRIFT

(11) **EP 3 151 213 B1**
(45) Veröffentlichungstag und Bekanntmachung des Hinweises auf die Patenterteilung: **21.12.2022**
(21) Anmeldenummer: 15465543.5
(22) Anmeldetag: 30.09.2015
(51) Int. Cl.: G08G 1/01, G08G 1/04, G08G 1/0962, B60R 1/00, H04N 5/77, G07C 5/08, H04N 5/232

(54) **FAHRZEUGVORRICHTUNG SOWIE VERFAHREN ZUR AUFZEICHNUNG EINES UMGEBUNGSBEREICHS EINES KRAFTFAHRZEUGS**
VEHICULAR APPARATUS AND METHOD OF RECORDING AN AREA IN THE VICINITY OF A MOTOR VEHICLE
DISPOSITIF DE VÉHICULE ET PROCÉDÉ D'ENREGISTREMENT D'UNE ZONE ENVIRONNANTE D'UN VÉHICULE AUTOMOBILE

(43) Veröffentlichungstag der Anmeldung: 05.04.2017
(73) Patentinhaber: Continental Autonomous Mobility Germany GmbH, 85057 Ingolstadt (DE)
(72) Erfinder: Pahontu, Nicolae, 405100 Campia Turzii (RO)
(74) Vertreter: Continental Corporation

(56) Entgegenhaltungen:
- DE-A1-102006 016 807
- DE-A1-102009 020 997
- DE-A1-102011 055 495
- DE-A1-102014 211 987
- US-A1- 2011 238 300

## Beschreibung

Die Erfindung betrifft eine Fahrzeugvorrichtung nach dem Oberbegriff des Anspruchs 1. Weiterhin betrifft die Erfindung ein Kraftfahrzeug sowie ein Verfahren zur Aufzeichnung eines Umgebungsbereichs eines Kraftfahrzeugs.

Aus der Druckschrift DE 2009 020 997 A1 ist ein Verfahren zum Aufzeichnen und Verarbeiten von Fahrtdaten eines Kraftfahrzeugs bekannt.

Eine Vorrichtung zur bildlichen Darstellung zumindest eines Bereichs der Umgebung eines Fahrzeugs ist beispielsweise aus der DE 197 341 896 C2 bekannt. Die Vorrichtung umfasst zumindest eine Kamera, mit einem Bildsensor zur Erfassung von Bilddaten, sowie zumindest einen Bildschirm, der zur Anzeige der sensorisch erfassten und elektronisch bearbeiteten Bilddaten ausgebildet und im Innenraum des Fahrzeugs im Sichtbereich des Fahrers angeordnet ist.

DE 10 2013 225 338 A1 zeigt ein Verfahren und eine Vorrichtung zur Aufzeichnung von Bilddaten einer Fahrzeugumgebung, wobei mittels wenigstens einer an einem Fahrzeug angeordneten Kamera Bilddaten aus zumindest einem Bereich der Fahrzeugumgebung erfasst und auf einem Speichermedium aufgezeichnet werden. Die Aufzeichnung erfolgt in Abhängigkeit einer manuellen Bedieneingabe.

Es ist Aufgabe der Erfindung, eine funktional verbesserte Fahrzeugvorrichtung für eine Bildaufzeichnung eines Interessenbereichs bereitzustellen.

Diese Aufgabe wird durch die Fahrzeugvorrichtung mit den Merkmalen des Anspruchs 1, durch ein Kraftfahrzeug mit den Merkmalen des Anspruchs 7 und durch ein Verfahren mit den Merkmalen des Anspruchs 10 gelöst. Vorteilhafte oder bevorzugte Ausführungsformen der Erfindung sind in den Unteransprüchen, der nachfolgenden Beschreibung und durch die Figuren dargelegt.

Es wird eine Fahrzeugvorrichtung zur Aufzeichnung eines Umgebungsbereichs eines Kraftfahrzeugs vorgeschlagen. Bei dem Umgebungsbereich handelt es sich beispielsweise um einen in Fahrtrichtung des Kraftfahrzeugs vorausliegenden oder rückwärtigen Umgebungsbereich. Insbesondere ist die Fahrzeugvorrichtung in dem Kraftfahrzeug integrierbar oder integriert.

Die Fahrzeugvorrichtung umfasst eine Kameraeinheit zur Aufnahme von mindestens einem Bild, insbesondere von Bildfolgen des Umgebungsbereichs des Kraftfahrzeugs. Beispielsweise ist die Kameraeinheit im Innenraum des Kraftfahrzeugs hinter einer Scheibe in und/oder entgegen der Fahrtrichtung anzuordnen. Vorzugsweise weist die Kameraeinheit mindestens eine Optik zur Projektion von Licht sowie mindestens einen Bildsensor wie z. B. einen CMOS-Sensor zur Erfassung des von der Optik projizierten Lichts auf. Die Kameraeinheit kann z. B. mindestens oder genau eine Mono- oder eine Stereokamera umfassen oder als diese ausgebildet sein. Die Kameraeinheit kann auch als Rundumsichtkamerasystem ausgebildet sein, welches durch eine Mehrzahl von Einzelkameras, bevorzugt mit
einem großen Öffnungswinkel, eine Erfassung von 360° um das Fahrzeug ermöglicht.

Vorteilhaft dient die Kameraeinheit als Umgebungserfassungssensor eines Fahrerassistenzsystems des Kraftfahrzeugs.

Die Fahrzeugvorrichtung umfasst eine Triggereinrichtung zur Ausgabe eines Aufzeichnungsstartsignals zum Auslösen der Aufzeichnung von mindestens einem durch die Kameraeinheit aufgenommenen Bild. Insbesondere ist das Aufzeichnungsstartsignal an die Kameraeinheit ausgegeben, wobei das insbesondere ab dem Ausgabezeitpunkt des Aufzeichnungsstartsignals von der Kameraeinheit aufgenommene Bild zumindest temporär auf der Aufzeichnungseinrichtung aufgezeichnet ist. Optional ergänzend ist die Fahrzeugvorrichtung z. B. ausgebildet, bei der Ausgabe des Aufzeichnungsstartsignals das zumindest temporär auf der Aufzeichnungseinrichtung aufgezeichnete Bild an einen fahrzeuginternen und/oder fahrzeugexternen Datenserver zu übermitteln. Bei dem fahrzeuginternen Datenserver handelt es sich insbesondere um einen im Kraftfahrzeug integrierten Datenserver. Bei dem fahrzeugexternen Datenserver handelt es sich insbesondere um einen innerhalb und/oder außerhalb des Fahrzeuginnenraums des Kraftfahrzeugs anordbaren Datenserver.

Vorzugsweise erfolgt die Aufzeichnung des ab dem Zeitpunkt des ausgelösten Aufzeichnungsstartsignals mindestens einen von der Kameraeinheit aufgenommenen Bilds bis ein Aufzeichnungsendsignal durch die Triggereinrichtung ausgelöst, ein vorbestimmtes Zeitintervall für die Aufzeichnung durchlaufen, eine vorbestimmte Anzahl an Bildern aufgezeichnet und/oder eine vorbestimmte Wegstrecke durch das Kraftfahrzeug zurückgelegt ist.

Die Triggereinrichtung ist ausgebildet, die Ausgabe des Aufzeichnungsstartsignals mit einer geographischen Position eines vorgegebenen, ortsgebundenen Interessensbereichs zu verknüpfen. Somit erfolgt die Ausgabe des Aufzeichnungsstartsignals durch die Triggereinrichtung insbesondere in Abhängigkeit der Position des vorgegebenen, ortsgebundenen Interessensbereichs. Vorteilhafterweise ist das mindestens eine aufgezeichnete Bild auf Wunsch bzw. bei Bedarf jederzeit oder zumindest für einen bestimmten Zeitraum abrufbar und dient somit als Informationsquelle über den vorgegebenen, ortsgebundenen Interessensbereich.

Bei dem ortsgebundenen Interessensbereich handelt es sich vorzugsweise um einen Interessensbereich mit einer unveränderlichen Lageposition, mit anderen Worten mit einem insbesondere geographisch unveränderbaren Standort. Insbesondere können der Triggereinrichtung genau ein oder mehrere, somit insbesondere mindestens zwei ortsgebundene Interessensbereiche vorgegebenen werden. Vorzugsweise kann der vorgegebene, ortsgebundene Interessensbereich neu erstellt, geändert und/oder durch weitere ortsgebundene Interessensbereiche ergänzt werden.

Die Triggereinrichtung ist ausgebildet, das Aufzeichnungsstartsignal bei einer ermittelten geographischen Übereinstimmung der Position des Kraftfahrzeugs und des vorgegebenen, ortsgebundenen Interessensbereichs auszugeben. Unter der Übereinstimmung ist beispielsweise eine maximale Entfernung der Positionsdaten des ortsgebundenen Interessensbereichs zum Kraftfahrzeug von maximal 500 Metern, insbesondere von maximal 100 Metern, im Speziellen von maximal 10 Metern zu verstehen. Die auf den vorgegebenen, ortsgebundenen Interessensbereich beschränkte Aufzeichnung erzielt einerseits relevante oder interessante Interessensbereiche für weiterführende Verwendungszwecke abzusichern, andererseits vergleichsweise zu einer kontinuierlichen Aufzeichnung den hierfür erforderlichen Rechen- und Speicherbedarf gering zu halten.

Zur Ermittlung der Übereinstimmung der geographischen Position des Kraftfahrzeugs mit dem vorgegebenen, ortsgebundenen Interessensbereich ist die Triggereinrichtung insbesondere ausgebildet, Positionsdaten des Kraftfahrzeugs und des ortsgebundenen Interessensbereichs abzurufen und miteinander zu vergleichen. Zum Abrufen der Positionsdaten der geographischen Position des Kraftfahrzeugs ist bevorzugt vorgesehen, dass die Triggereinrichtung mit einer Ortungseinrichtung verbindbar ist oder diese umfasst, welche zur geographischen Positionsbestimmung des Kraftfahrzeugs ausgebildet ist. Zum Abrufen der Positionsdaten des vorgegebenen, ortsgebundenen Interessensbereichs ist die Fahrzeugvorrichtung vorzugsweise mit dem fahrzeuginternen und/oder dem fahrzeugexternen Datenserver verbindbar, auf welchem der vorgegebene, ortsgebundene Interessensbereich mit der zugehörigen geographischen Position für die Triggereinrichtung abrufbar hinterlegt ist.

Vor allem für den Fahrer bietet die Erfindung den Vorteil, dass er sich aufgezeichnete Bilder nachträglich ansehen kann. Neben Sehenswürdigkeiten kann er so rekonstruieren, welchen Status bestimmte Infrastrukturelemente an einer bestimmten Position bei seiner Vorbeifahrt eingenommen hatten, z. B. (Wechsel-)Verkehrsschilder, Ampeln, der Zustand der Fahrbahn, von Leitplanken etc. Dazu könnte die geographische Position, an denen das mindestens eine Bild aufgenommen und aufgezeichnet wurde, in einer Navigationskarte angezeigt werden.

Weiterhin können Wetterbedingungen bzw. der Fahrbahnzustand infolge von lokalen Wetterbedingungen an einer bestimmten Position vom Fahrer nachträglich aus dem mindestens einen aufgezeichneten Bild ermittelt werden. So kann festgestellt werden, ob eine nasse/vereiste/schneebedeckte etc. Fahrbahn vorlag.

Weiterhin können Fahrbahnverläufe wie z.B. Kurven, Kreuzungen etc. auf diese Weise rekonstruiert werden. Und schließlich können auch Fahrsituationen mit weiteren Verkehrsteilnehmern wie z. B. das Passieren eines entgegenkommenden Kraftfahrzeugs, das Überholen eines vorausfahrenden Kraftfahrzeugs, das Überholtwerden durch ein nachfolgendes Kraftfahrzeug, das Durchfahren von Kreuzungsbereichen, Kreisverkehren, Auffahrten, Ausfahrten, Bergkuppen und dergleichen mehr rekonstruiert werden.

Bei einer ersten bevorzugten Ausführungsform ist der vorgegebene, ortsgebundene Interessensbereich ein durch einen Fahrzeuginsassen des aufzuzeichnenden Bilds festgelegter Interessensbereich. Mit anderen Worten ist insbesondere ein Endbenutzer zur Eingabe des ortsgebundenen Interessensbereichs und folglich zur Bestimmung des positionsabhängigen Aufnahmestartsignals berechtigt. Auf diese Weise kann einer Person das mindestens eine aufgezeichnete Bild zu dem ausgewählten, ortsgebundenen Interessensbereich zur späteren Verwendung bereitgestellt werden. Optional ergänzend kann das Aufzeichnungsendsignal durch den Fahrzeuginsassen vorgegeben sein. Bei den ortsgebundenen Interessensbereichen handelt es sich in diesem Zusammenhang beispielsweise um Streckenabschnitte, Landschaften oder Sehenswürdigkeiten im Umgebungsbereich des Kraftfahrzeugs. Somit ist der aufzuzeichnende, ortsgebundene Interessensbereich zwar durch eine Person im Kraftfahrzeug vorgegeben. Jedoch erfolgt das Auslösen des Aufzeichnungsstartsignals durch die Triggereinrichtung, sodass ein manueller Eingabebefehl des Aufzeichnungsstartsignals für die Aufzeichnung des ortsgebundenen Interessensbereichs vermieden ist. Auf diese Weise kann eine Ablenkung des Fahrers durch den Wunsch die Aufzeichnung zu starten verhindert und somit das Unfallrisiko reduziert werden. Weiterhin erzielt die anwenderfreundliche Aufzeichnung eine Stressreduktion und folglich eine Steigerung des Komforts für den Fahrer.

Bei einer bevorzugten Weiterbildung ist das mindestens eine aufgezeichnete Bild auf einem Speichermedium wie z. B. einer Festplatte oder einer SD-Karte abgespeichert. Vorzugsweise umfasst die Fahrzeugvorrichtung das Speichermedium. Alternativ ist es jedoch z. B. ebenso möglich, dass das Speichermedium ein über eine elektrische Schnittstelle eines Bordnetzes des Kraftfahrzeugs angeschlossenes Speichermedium ist, wobei die Aufzeichnungseinrichtung zur Übermittlung der Bilddaten des aufgezeichneten Bilds an das Speichermedium z. B. über das Bordnetz mit dem Speichermedium verbunden ist. Auf diese Weise ist dem Fahrzeuginsassen ein schneller Zugriff auf das mindestens eine aufgezeichnete Bild ermöglicht.

Beispielsweise wird der ortsgebundene Interessensbereich durch den Fahrzeuginsassen über eine Eingabeeinrichtung vorgegeben Insbesondere ist die Eingabeeinrichtung mit dem fahrzeuginternen bzw. fahrzeugexternen Datenserver zur Übertragung des vorgegebenen Interessensbereichs verbindbar oder umfasst diesen. Die Eingabeeinrichtung weist einen Bildschirm mit Touchfunktion auf, über welchen der aufzuzeichnende ortsgebundene Interessensbereich in einer elektronischen Karte ausgewählt wird. Vorteilhaft an der Auswahl in der elektronischen Karte ist die automatische Auswertung der in der elektronischen Karte hinterlegten Positionsdaten des ausgewählten Interessensbereichs. Bei der Eingabeeinrichtung handelt es sich z. B. um ein mit der Fahrzeugvorrichtung koppelbares Smartphone, einen fahrzeuginternen Bildschirm des Kraftfahrzeugs oder um ein fahrzeuginternes oder fahrzeugintegriertes Navigationssystem. In einer möglichen Ausgestaltung sind die Ortskoordinaten, das Eintragungsdatum und/oder das vorbestimmte Aufzeichnungszeitintervall des durch den Fahrzeuginsassen vorgegebenen ortsgebundenen Interessensbereichs in der auf dem Bildschirm der Eingabeeinrichtung angezeigten elektronischen Karte eingeblendet.

Bei einer zweiten nicht durch die beanspruchte Erfindung abgedeckten Ausführungsform ist der vorgegebene, ortsgebundene Interessensbereich ein von einer Fahrerassistenzvorrichtung des Kraftfahrzeugs vorgegebener Interessensbereich. Vorzugsweise umfasst die Fahrerassistenzvorrichtung den fahrzeuginternen Datenserver mit den vorgegebenen, ortsgebundenen Interessensbereichen. Bei dem durch die Fahrerassistenzvorrichtung vorgegebenen, ortsgebundenen Interessensbereich handelt es sich beispielsweise um einen unfallgefährdeten Bereich, einen staugefährdeten Bereich und/oder um bestimmte Straßenstrecken oder Straßenarten wie z. B. Autobahnen. Insbesondere ist die Fahrerassistenzvorrichtung für die Umsetzung einer Fahrerassistenzfunktion, eine Ausgabe von Fahrempfehlungen und/oder für ein aktives Eingreifen in die Fahrzeugdynamik ausgebildet, Zielobjekte in dem aufgezeichneten Bild des vorgegebenen, ortsgebundenen Interessensbereichs auszuwerten. Bei den für den vorgegebenen, ortsgebundenen Interessensbereich auszuwertenden Zielobjekten handelt es sich beispielsweise um Stauenden, Spurmarkierungen, Kurven, temporäre Informationsanzeigen und/oder Verkehrszeichen. Durch die auf die für die Fahrerassistenzvorrichtung vorgegebenen, relevanten Interessensbereiche beschränkte Aufzeichnung ist der für die Auswertung der Zielobjekte erforderliche Rechen- und Speicheraufwand vergleichsweise zu einer Auswertung einer kontinuierlichen Aufzeichnung reduziert. Insbesondere sind durch die beschränkte Aufzeichnung irrelevante Streckenabschnitte für die Auswertung von Zielobjekten ausgeschlossen. So kann z. B. die unnötige Auswertung von Spurmarkierungen auf einem Feldweg vermieden werden.

Ferner ist die Fahrerassistenzvorrichtung beispielsweise ausgebildet, die Auswertung bestimmter Zielobjekte in Abhängigkeit des vorgegebenen, ortsgebundenen Interessensbereichs zu erweitern oder zu priorisieren. So ist es beispielsweise bei staugefährdeten Bereichen vorteilhaft, die Auswertung von Stauenden zu priorisieren, sodass eine schnelle und zuverlässige Auswertung ermöglicht ist. Ein weiteres Ausführungsbeispiel ist die Auswertung von regelmäßig wechselnden Tempolimits und/oder Informationsanzeigen, wie es z. B. bei staugefährdeten Straßenabschnitten oftmals der Fall ist. Im Vergleich zu Navigationssystemen, welche in der Regel lediglich dauerhaft eingerichtete Tempolimits anzeigen, ist es somit mittels des aufgezeichneten vorgegebenen Interessensbereichs möglich, temporäre bzw. regelmäßig wechselnde Informationsanzeigen des ortsgebundenen Interessensbereichs auszuwerten und dem Fahrzeugführer bereitzustellen.

Optional ergänzend ist die Fahrerassistenzvorrichtung ausgebildet, das mindestens eine aufgezeichnete Bild und/oder das ausgewertete Zielobjekt an eine Fahrerassistenzvorrichtung eines weiteren, insbesondere nachkommenden Kraftfahrzeugs zu übermitteln. Vorzugsweise erfolgt die Übermittlung des mindestens einen aufgezeichneten Bilds und/oder des ausgewerteten Zielobjekts mittels eines Car-to-Car-Kommunikationssystems. Durch die Übermittlung des aus dem aufgezeichneten Bild ausgewerteten Zielobjekts ist eine mehrfache Auswertung der Zielobjekte und der hiermit verbundene Rechenaufwand vermieden und den Fahrerassistenzvorrichtungen nachkommender Kraftfahrzeuge ein vorausschauendes Umsetzen der Fahrerassistenzfunktion ermöglicht.

Weiterhin ist die Fahrerassistenzvorrichtung insbesondere ausgebildet, das mindestens eine aufgezeichnete Bild und/oder das ausgewertete Zielobjekt an einen fahrzeugexternen Zentraldatenserver (Back-End-Server) zu übermitteln. Darauf basierend ist es dem fahrzeugexternen Zentraldatenserver möglich, Verkehrsinformationen, Vorschriften, Gebote und/oder Verbote z. B. an elektronischen Anzeigetafeln anzupassen oder im Falle eines ausgewerteten Unfalls den Rettungsdienst zu alarmieren. Vorzugsweise erfolgt die Übermittlung mittels eines Car-to-X-Kommunikationssystems.

Bei einer dritten, nicht durch die beanspruchte Erfindung abgedeckten Ausführungsform ist der vorgegebene, ortsgebundene Interessensbereich ein von dem fahrzeugexternen Zentraldatenserver vorgegebener, ortsgebundener Interessensbereich. Bei dem durch den externen Zentraldatenserver vorgegebenen, ortsgebundenen Interessensbereich handelt es sich beispielsweise um einen unfallgefährdeten Bereich, einen staugefährdeten Bereich und/oder einen temporären Baustellenbereich. Durch die Bildaufzeichnung solcher ortsgebundenen Interessensbereiche kann z. B. die aktuelle Verkehrslage ermittelt werden. Beispielsweise ist die Fahrerassistenzvorrichtung ausgebildet, aus dem aufgezeichneten Bild des von dem externen Zentraldatenserver vorgegebenen Interessensbereichs das Zielobjekt wie z. B. ein Stauende auszuwerten und das ausgewertete Zielobjekt an den fahrzeugexternen Zentraldatenserver zu übermitteln und/oder darauf basierend Fahrerassistenzfunktionen umzusetzen. Alternativ kann jedoch ebenso vorgesehen sein, dass das aufgezeichnete Bild an den externen Zentraldatenserver übermittelt und die Auswertung von Zielobjekten durch den externen Zentraldatenserver erfolgt.

Vorzugsweise ist der externe Zentraldatenserver ausgebildet, das mindestens eine aufgezeichnete Bild, das von dem fahrzeugexternen Zentraldatenserver ausgewertete Zielobjekt und/oder auf dem ausgewerteten Zielobjekt basierende vom fahrzeugexternen Zentraldatenserver eingeleitete Maßnahmen an Fahrerassistenzvorrichtungen weiterer Kraftfahrzeuge zu übermitteln. Somit können Fahrerassistenzvorrichtungen z. B. über aktuelle Verkehrssituationen oder temporäre Tempolimits informiert und darauf basierende Fahrerassistenzfunktionen eingeleitet werden.

Gemäß einer besonders bevorzugten Ausführungsform sind die durch den fahrzeugexternen Zentraldatenserver und/oder durch die Fahrerassistenzvorrichtung ausgewerteten Zielobjekte wie z. B. Tempolimits, Sehenswürdigkeiten, Baustellen, Straßensperrungen, Unfälle, aber auch aufgehobene Baustellen oder Straßensperrungen usw. in einem elektronischen Kartenmaterial zu hinterlegen oder zu aktualisieren. Beispielsweise sind die von der Fahrerassistenzvorrichtung bzw. vom fahrzeugexternen Zentraldatenserver ausgewerteten Zielobjekte an ein fahrzeuginternes Navigationssystem, alternativ oder optional ergänzend an einen zentralen Navigationsdatenserver übermittelt. Die ausgewerteten Zielobjekte können durch das Einpflegen bzw. Aktualisieren im elektronischen Kartenmaterial für die Routenplanung berücksichtigt und/oder den Fahrzeuginsassen als Information bereitgestellt werden. Für die Aktualisierung des elektronischen Kartenmaterials ist z. B. das Navigationssystem und/oder der zentrale Navigationsdatenserver ausgebildet, die Positionsdaten des ausgewerteten Zielobjekts mit den im elektronischen Kartenmaterial hinterlegten Positionsdaten des Zielobjekts zu vergleichen und bei einer ausgewerteten Positionsabweichung die hinterlegten Positionsdaten durch die aus dem aufgezeichneten Bild ermittelten Positionsdaten des Zielobjekts zu ersetzen. Somit sind die Positionsdaten von geänderten, hinzugekommenen oder entfernten Zielobjekten in dem elektronischen Kartenmaterial aktualisiert. Auf diese Weise ist es möglich, dass der fahrzeugexterne Zentraldatenserver gezielt Bilddaten von Kraftfahrzeugen anfordert, die sich aktuell in einem geographischen Bereich befinden, aus dem der Zentraldatenserver aktualisierte Bilddaten empfangen möchte, um diese auszuwerten.

Aus Kosten- und Platzgründen sind Kameraeinheiten im Kraftfahrzeug in aller Regel in ihrer Lage unverstellbar, somit im Speziellen um eine Rotations-, Längs-, Querachse und sonstigen Achsen bewegungsfrei im Kraftfahrzeug integriert. Folglich kann es je nach Relativposition des Kraftfahrzeugs zum vorgegebenen, ortsgebundenen Interessensbereich vorkommen, dass der vorgegebene, ortsgebundene Interessensbereich durch die Kameraeinheit aufgrund des beschränkten Öffnungswinkels nicht erfasst ist. Vor diesem Hintergrund ist die Triggereinrichtung bevorzugt ausgebildet, das Aufzeichnungsstartsignal in Abhängigkeit eines ermittelten Lagewinkels des Kraftfahrzeugs zu dem entlang eines vorausliegenden Fahrbahnverlaufs vorliegenden vorgegebenen, ortsgebundenen Interessensbereich auszulösen. Auf diese Weise kann ein unnötiger Rechen- und Speicherbedarf vermieden werden.

Weiterhin ist die Triggereinrichtung insbesondere ausgebildet, das Aufzeichnungsstartsignal in Abhängigkeit einer ermittelten Fahrtrichtung des Kraftfahrzeugs auf einer Fahrbahn auszulösen. So kann es beispielsweise vorkommen, dass der vorgegebene, ortsgebundene Interessensbereich lediglich von einer Fahrtrichtung aus zu sehen und/oder aufgrund eines beschränkten Öffnungswinkels der Kameraeinheit nicht zu erfassen ist. Somit kann auch hier ein unnötiger Rechen- und Speicherbedarf vermieden werden.

Vorzugsweise ist die Triggereinrichtung im Falle eines voraussichtlich verspäteten Auslösungszeitpunkts der Aufzeichnung des vorgegebenen, ortsgebundenen Interessensbereichs ausgebildet, das Aufzeichnungsstartsignal bereits bei einer ermittelten geographischen Annäherung der geographischen Positionen des Kraftfahrzeugs und des vorgegebenen Interessensbereichs auszulösen. Somit wird der Zeitpunkt des ausgegebenen Aufzeichnungsstartsignals im Falle eines voraussichtlich nicht oder unvollständig aufgezeichneten vorgegebenen Interessensbereichs beispielsweise um ein Zehntel nach vorne verlegt, um die Aufzeichnung des vorgegebenen Interessensbereichs sicherzustellen. Vorzugsweise wird das vorbestimmte Zeitintervall für die Aufzeichnung verlängert, um eine vollständige Aufzeichnung des vorgegebenen Interessensbereichs sicherzustellen. Der voraussichtlich verspätete Auslösungszeitpunkt wird beispielsweise aufgrund einer hohen Fahrzeuggeschwindigkeit des Kraftfahrzeugs und/oder aufgrund einer hohen Auslastung eines Prozessors vermutet.

In einer möglichen Ausgestaltung der Erfindung ist die Triggereinrichtung im Falle eines verspäteten Auslösungszeitpunkts der Aufzeichnung des vorgegebenen, ortsgebundenen Interessensbereichs ausgebildet, das Aufzeichnungsstartsignal bei einer ermittelten geographischen Annäherung der geographischen Positionen des Kraftfahrzeugs und desselben vorgegebenen Interessensbereichs auszulösen. Somit wird der Zeitpunkt des ausgegebenen Aufzeichnungsstartsignals im Falle eines nicht oder unvollständig aufgezeichneten vorgegebenen Interessensbereichs nach vorne verlegt, um bei einer erneuten Annäherung die Aufzeichnung des vorgegebenen Interessensbereichs sicherzustellen. Der Auslösungszeitpunkt des ausgegebenen Aufzeichnungsstartsignals wird beispielsweise als verspätet ausgewertet, sollte z. B. durch die Fahrerassistenzvorrichtung das auszuwertende Zielobjekt, wie z. B. eine Einfahrt eines Tunnels nicht aufzufinden sein.

Ein verspätetes Aufzeichnungsstartsignal kann beispielsweise aus einer Abweichung der hinterlegten Positionsdaten von den tatsächlichen Positionsdaten des vorgegebenen, ortsgebundenen Interessensbereichs resultieren.

Sollte der Fahrzeuginsasse den ortsgebundenen Interessensbereich vorgegeben haben, ist bevorzugt, dass die erfolgreich und/oder die gescheitert aufgezeichneten, ortsgebundenen Interessensbereiche z. B. in der elektronischen Karte für den Fahrzeuginsassen kenntlich dargestellt sind. Auf diese Weise wird dem Fahrzeuginsassen ein schneller Überblick über den Status seiner gewünschten Aufzeichnungen geliefert.

Einen weiteren Gegenstand der Erfindung betrifft ein Kraftfahrzeug mit mindestens einer Fahrzeugvorrichtung nach der vorhergehenden Beschreibung. Insbesondere ist die Kameraeinheit der mindestens einen Fahrzeugvorrichtung im Fahrzeuginnenraum und/oder an der Karosserie des Kraftfahrzeugs derart angeordnet, dass der vorausliegende, rückwärtige und/oder ein seitlicher Umgebungsbereich des Kraftfahrzeugs erfasst ist.

Besonders bevorzugt umfasst das Kraftfahrzeug die Fahrerassistenzvorrichtung nach der vorhergehenden Beschreibung. Zur Unterstützung des Fahrers des Kraftfahrzeugs ist die Fahrerassistenzvorrichtung insbesondere ausgebildet, aus dem mindestens einen aufgezeichneten Bild mindestens ein Zielobjekt auszuwerten und in Abhängigkeit des mindestens einen ausgewerteten Zielobjekts eine Fahrerassistenzfunktion wie z. B. einen Lenkempfehlung oder ein aktives Eingreifen in die Fahrzeugdynamik umzusetzen.

Ferner betrifft die Erfindung ein Verfahren zur Aufzeichnung des Umgebungsbereichs des Kraftfahrzeugs gemäß Anspruch 12.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer schematischen Blockdarstellung eine Fahrzeugvorrichtung;
- Figur 2: ebenfalls schematisch dargestellt ein Kraftfahrzeug mit der Fahrzeugvorrichtung sowie eine Übermittlung von mindestens einem aufgezeichneten Bild an ein nachfolgendes Kraftfahrzeug oder einen fahrzeugexternen Zentraldatenserver.

Einander entsprechende Teile sind in allen Figuren jeweils mit den gleichen Bezugszeichen versehen.

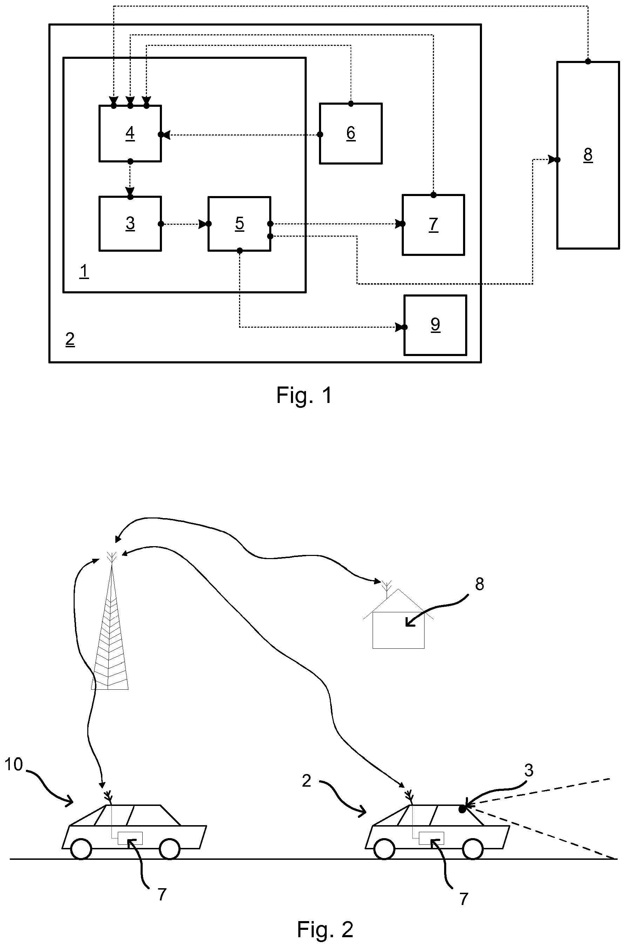

Figur 1 zeigt in einer schematischen Darstellung eine Fahrzeugvorrichtung 1, welche in einem Kraftfahrzeug 2 integriert, somit insbesondere z. B. im Fahrzeuginnenraum oder an der Fahrzeugkarosserie des Kraftfahrzeugs 2 angeordnet und optional mit dem Bordnetz des Kraftfahrzeugs 2 elektrisch verbunden ist. Die Fahrzeugvorrichtung 1 umfasst eine Kameraeinheit 3 zur Aufnahme mindestens eines Bilds, insbesondere eines Videos eines Umgebungsbereichs des Kraftfahrzeugs. Weiterhin umfasst die Fahrzeugvorrichtung 1 eine Triggereinrichtung 4, welche für das Auslösen der Aufzeichnung von mindestens einem durch die Kameraeinheit 3 aufgenommenen Bild zur Ausgabe eines Aufzeichnungsstartsignals an die Kameraeinheit 3 ausgebildet ist. Es erfolgt ab dem Zeitpunkt des ausgelösten Aufzeichnungsstartsignals die Aufzeichnung des mindestens einen von der Kameraeinheit 3 aufgenommenen Bilds auf einer Aufzeichnungseinrichtung 5 der Fahrzeugvorrichtung 1. Die Aufzeichnung erfolgt bis z. B. ein Aufzeichnungsendsignal durch die Triggereinrichtung 4 ausgegeben ist.

Die Triggereinrichtung 4 ist ausgebildet, das Auslösen des Aufzeichnungsstartsignals mit einer geographischen Position eines vorgegebenen, ortsgebundenen Interessensbereichs zu verknüpfen und bei einer ermittelten geographischen Übereinstimmung der Positionen des Kraftfahrzeugs 2 und des vorgegebenen, ortsgebundenen Interessensbereichs an die Kameraeinheit 3 drahtlos oder drahtgebunden auszugeben. Somit ist durch die Fahrzeugvorrichtung 1 insbesondere eine ortsgebundene Auslösung des Aufzeichnungsstartsignals, mit anderen Worten eine positionsgetaktete Bildaufzeichnung umgesetzt.

Zur Ermittlung der geographischen Übereinstimmung der Positionen ist die Triggereinrichtung 4 mit einer Ortungseinrichtung 6 wie z. B. einer GPS-Ortungseinrichtung verbunden, mittels der die geographische Position des Kraftfahrzeugs 2 auswertbar ist. Die Ortungseinrichtung 6 ist z. B. ein Teil eines fahrzeuginternen Navigationssystems. Die Positionsdaten des vorgegebenen, ortsgebundenen Interessensbereichs sind auf einem fahrzeuginternen und/oder fahrzeugexternen Datenserver für die Triggereinrichtung 4 abrufbar hinterlegt. Mittels eines Vergleichs der Positionsdaten ist die geographische Übereinstimmung der Positionen durch die Triggereinrichtung 4 ermittelbar.

Der ortsgebundene Interessensbereich ist von einem Fahrzeuginsassen des Kraftfahrzeugs 2 vorgegeben. Das mindestens eine aufgezeichnete Bild ist auf einem für den Fahrzeuginsassen zugreifbaren Speichermedium 9 wie z. B. einer SD-Karte abgespeichert, welche für die Bildübertragung mit der Aufzeichnungseinrichtung 5 verbunden ist.

Optional ergänzend ist der ortsgebundene Interessensbereich von einer Fahrerassistenzvorrichtung 7 des Kraftfahrzeugs 2 vorgegeben. Das aufgezeichnete Bild dient der Fahrerassistenzvorrichtung 7 insbesondere als Informationsquelle für eine gezielte Identifikation von Zielobjekten in dem vorgegebenen, aufgezeichneten Interessensbereich. Durch die Aufzeichnung solcher ortsgebundenen Interessensbereiche können verschiedene Fahrerassistenzfunktionen wie zum Beispiel ein Bremsassistent oder ein Abstandswarner zuverlässig umgesetzt werden. Die Fahrerassistenzvorrichtung 7 umfasst den fahrzeuginternen Datenserver mit den vorgegebenen Interessensbereichen, welcher zur Übermittlung der Positionsdaten des vorgegebenen, ortsgebundenen Interessensbereichs mit der Triggereinrichtung 4 verbunden ist. Zur Auswertung der Zielobjekte ist das mindestens eine aufgezeichnete Bild von der Aufzeichnungseinrichtung 5 an die Fahrerassistenzvorrichtung 7 übermittelt.

Bei einem weiteren, nicht durch die beanspruchte Erfindung abgedeckten Ausführungsbeispiel ist der ortsgebundene Interessensbereich von einem fahrzeugexternen Zentraldatenserver 8 vorgegeben. Das aufgezeichnete Bild dient dem fahrzeugexternen Zentraldatenserver 8 für eine gezielte Identifikation von Zielobjekten in dem vorgegebenen, ortsgebundenen Interessensbereich. Vorzugsweise ist der externe Zentraldatenserver 8 anhand der Auswertung von Zielobjekten in dem mindestens einen übermittelten Bild ausgebildet, entsprechende Maßnahmen zu ergreifen, so beispielsweise bei einem ausgewerteten Unfall eine Warnmeldung und/oder ein Tempolimit in dem ortsgebundenen Interessensbereich für die Verkehrsteilnehmer z. B. über Anzeigetafeln oder über fahrzeugintegriere bzw. fahrzeuginterne Navigationssysteme auszugeben. Der fahrzeugexternen Datenserver 8 ist zur Übermittlung der Positionsdaten des vorgegebenen, ortsgebundenen Interessensbereichs mit der Triggereinrichtung 4 verbunden. Zur Auswertung der Zielobjekte ist das mindestens eine aufgezeichnete Bild von der Aufzeichnungseinrichtung 5 an den fahrzeugexternen Datenserver 8 übermittelt. Beispielsweise ist die Fahrzeugvorrichtung 1 über ein Netzwerk, beispielsweise über ein Mobilfunknetz mit dem externen Zentraldatenserver 8 für den Datenaustausch verbunden.

Die Triggereinrichtung 4 ist ausgebildet, den Erfolgsstatus der Aufzeichnung des vorgegebenen, ortsgebundenen Interessensbereichs zu bestimmen, abzufragen und/oder zu empfangen. Sollte die Aufzeichnung des vorgegebenen, ortsgebundenen Interessensbereichs gescheitert sein, ist die Triggereinrichtung 4 ausgebildet, ein erneutes Aufzeichnungsstartsignal bei einer erneuten geographischen Übereinstimmung oder bereits bei einer Annäherung der Positionen auszugeben.

Wie in Figur 2 dargestellt, ist die Fahrerassistenzvorrichtung 7 des Kraftfahrzeugs 2 ausgebildet, das mindestens eine ausgewertete Zielobjekt an eine Fahrerassistenzvorrichtung 7 eines nachkommenden Kraftfahrzeugs 10 über ein Car-to-Car Kommunikationssystem zu übermitteln. Weiterhin ist die Fahrerassistenzvorrichtung 7 des Kraftfahrzeugs 2 ausgebildet, das mindestens eine ausgewertete Zielobjekt an den fahrzeugexternen Zentraldatenserver 8 über ein Car-to-X Kommunikationssystem zu übermitteln. Im Vergleich zu der Übermittlung des mindestens aufgezeichneten Bilds können Datenströme minimiert und somit entsprechende Maßnahmen wie z. B. die Ausgabe einer Warnmeldung auf schnelle Weise umgesetzt werden. Ebenfalls kann vorgesehen sein, dass das von der Fahrerassistenzvorrichtung 7 des Kraftfahrzeugs 2 ausgewertete Zielobjekt über den fahrzeugexternen Zentraldatenserver 8 an die Fahrerassistenzvorrichtung des nachkommenden Kraftfahrzeugs 10 übermittelt wird.

### Bezugszeichenliste:

- 1: Fahrzeugvorrichtung
- 2: Kraftfahrzeug
- 3: Kameraeinheit
- 4: Triggereinrichtung
- 5: Aufzeichnungseinrichtung
- 6: Ortungseinrichtung
- 7: Fahrerassistenzvorrichtung
- 8: Fahrzeugexternen Zentraldatenserver
- 9: Speichermedium
- 10: Nachkommendes Kraftfahrzeug

## Patentansprüche

1. Fahrzeugvorrichtung (1) zur Aufzeichnung eines Umgebungsbereichs eines Kraftfahrzeugs (2),
mit einer Eingabeeinrichtung, welche einen Bildschirm mit Touchfunktion aufweist, wobei die Eingabeeinrichtung dazu ausgebildet ist, auf dem Bildschirm eine elektronische Karte anzuzeigen und einen aufzuzeichnenden ortsgebundenen Interessenbereich durch einen Fahrzeuginsassen auszuwählen,
mit einer Kameraeinheit (3) zur Aufnahme von mindestens einem Bild des Umgebungsbereichs, und
mit einer Triggereinrichtung (4) zur Ausgabe eines Aufzeichnungsstartsignals zum Auslösen der Aufzeichnung von mindestens einem aufgenommenen Bild durch die Kameraeinheit (3),
wobei die Triggereinrichtung (4) ausgebildet ist, die Ausgabe des Aufzeichnungsstartsignals mit einer geographischen Position des ausgewählten, ortsgebundenen Interessensbereichs zu verknüpfen, und
wobei die Triggereinrichtung (4) ausgebildet ist, das Aufzeichnungsstartsignal bei einer ermittelten geographischen Übereinstimmung der Positionen des Kraftfahrzeugs (2) und des ausgewählten, ortsgebundenen Interessensbereichs auszugeben.

2. Fahrzeugvorrichtung (1) nach Anspruch 1, wobei das mindestens eine aufgezeichnete Bild auf einem Speichermedium (9) abgespeichert ist.

3. Fahrzeugvorrichtung (1) nach einem der vorhergehenden Ansprüche, wobei der ausgewählte, ortsgebundene Interessensbereich eine Sehenswürdigkeit, ein unfallgefährdeter Verkehrsbereich, ein staugefährdeter Verkehrsbereich und/oder ein temporärer Baustellenbereich ist.

4. Fahrzeugvorrichtung (1) nach einem der vorhergehenden Ansprüche, wobei die Triggereinrichtung (4) ausgebildet ist, das Aufzeichnungsstartsignal in Abhängigkeit einer ermittelten Fahrtrichtung des Kraftfahrzeugs (2) auf einer Fahrbahn auszulösen.

5. Fahrzeugvorrichtung (1) nach einem der vorhergehenden Ansprüche, wobei die Triggereinrichtung (4) ausgebildet ist, das Aufzeichnungsstartsignal in Abhängigkeit eines ermittelten Lagewinkels des Kraftfahrzeugs (2) zu dem entlang eines vorausliegenden Fahrbahnverlaufs vorliegenden erkannten Interessensbereich auszulösen.

6. Fahrzeugvorrichtung (1) nach einem der vorhergehenden Ansprüche, wobei bei einem verspäteten Auslösungszeitpunkt für die Aufzeichnung des ausgewählten, ortsgebundenen Interessensbereichs die Triggereinrichtung (4) ausgebildet ist, das Aufzeichnungsstartsignal bei einer ermittelten geographischen Annäherung der Positionen des Kraftfahrzeugs (2) und desselben ausgewählten, ortsgebundenen Interessensbereichs auszulösen.

7. Kraftfahrzeug (2) mit der Fahrzeugvorrichtung (1) nach einem der vorhergehenden Ansprüche.

8. Kraftfahrzeug (2) nach Anspruch 7, umfassend eine Fahrerassistenzvorrichtung (7) zur Unterstützung des Fahrzeugführers des Kraftfahrzeugs (2), wobei die Fahrerassistenzvorrichtung (7) ausgebildet ist, aus dem mindestens einen aufgezeichneten Bild mindestens ein Zielobjekt auszuwerten und in Abhängigkeit der mindestens einen Zielobjekts mindestens eine Fahrerassistenzfunktion umzusetzen.

9. Kraftfahrzeug (2) nach Anspruch 8, wobei die Fahrerassistenzvorrichtung (7) ausgebildet ist, das mindestens eine ausgewertete Zielobjekt an eine Fahrerassistenzvorrichtung (7) weiterer, insbesondere nachkommender Kraftfahrzeuge (10) und/oder an einen fahrzeugexternen Zentraldatenserver (8) zu übermitteln.

10. Verfahren zur Aufzeichnung eines Umgebungsbereichs eines Kraftfahrzeugs (2), wobei eine Triggereinrichtung (4) zum Auslösen der Aufzeichnung von mindestens einem durch eine Kameraeinheit (3) aufgenommenen Bild ein Aufzeichnungsstartsignal ausgibt, wobei die Triggereinrichtung (4) die Ausgabe des Aufzeichnungsstartsignals mit einer geographischen Position eines durch einen Fahrzeuginsassen auf einer elektronischen Karte auf einem Bildschirm mit Touchfunktion ausgewählten, ortsgebundenen Interessensbereichs verknüpft, wobei die Triggereinrichtung (4) das Aufzeichnungsstartsignal bei einer ermittelten geographischen Übereinstimmung der Positionen des Kraftfahrzeugs (2) und des ausgewählten, ortsgebundenen Interessensbereichs ausgibt.

11. Verfahren nach Anspruch 10, wobei die Triggereinrichtung (4) das Aufzeichnungsstartsignal zusätzlich in Abhängigkeit der Fahrtrichtung und/oder des Lagewinkels des Kraftfahrzeugs (2) auslöst.

## Claims

1. Vehicle apparatus (1) for recording a surrounding region of a motor vehicle (2),
comprising an input device having a screen with touch function, wherein the input device is configured to display an electronic map on the screen and to select, by way of a vehicle occupant, a locationally fixed region of interest to be recorded,
comprising a camera unit (3) for recording at least one image of the surrounding region, and
comprising a trigger device (4) for outputting a recording start signal for triggering the recording of at least one recorded image by way of the camera unit (3),
wherein the trigger device (4) is configured to link the output of the recording start signal to a geographic position of the selected, locationally fixed region of interest, and
wherein the trigger device (4) is configured to output the recording start signal when there is a determined geographic match between the positions of the motor vehicle (2) and of the selected, locationally fixed region of interest.

2. Vehicle apparatus (1) according to Claim 1, wherein the at least one recorded image is stored on a storage medium (9).

3. Vehicle apparatus (1) according to either of the preceding claims, wherein the selected, locationally fixed region of interest is a tourist attraction, a traffic area associated with a high risk of accidents, a traffic area associated with a high risk of traffic jams, and/or a region with temporary construction work.

4. Vehicle apparatus (1) according to any of the preceding claims, wherein the trigger device (4) is configured to trigger the recording start signal in dependence on an ascertained direction of travel of the motor vehicle (2) on a road surface.

5. Vehicle apparatus (1) according to any of the preceding claims, wherein the trigger device (4) is configured to trigger the recording start signal in dependence on a determined orientation angle of the motor vehicle (2) in relation to the detected region of interest located along the course of a road surface lying in front of the vehicle.

6. Vehicle apparatus (1) according to any of the preceding claims, wherein the trigger device (4) is configured, in the case of a belated trigger time for the recording of the selected, locationally fixed region of interest, to trigger the recording start signal when it is determined that the position of the motor vehicle (2) geographically approaches the position of the same selected, locationally fixed region of interest.

7. Motor vehicle (2) having the vehicle apparatus (1) according to any of the preceding claims.

8. Motor vehicle (2) according to Claim 7, comprising a driver assistance apparatus (7) for assisting the driver of the motor vehicle (2), wherein the driver assistance apparatus (7) is configured to evaluate at least one target object from the at least one recorded image and to implement at least one driver assistance function in dependence on the at least one target object.

9. Motor vehicle (2) according to Claim 8, wherein the driver assistance apparatus (7) is configured to transmit the at least one evaluated target object to a driver assistance apparatus (7) of further, in particular following motor vehicles (10) and/or to a central data server (8) outside the vehicle.

10. Method for recording a surrounding region of a motor vehicle (2), wherein a trigger device (4) outputs a recording start signal for triggering the recording of at least one image recorded by way of a camera unit (3), wherein the trigger device (4) links the output of the recording start signal to a geographic position of a locationally fixed region of interest that is selected, by way of a vehicle occupant, on an electronic map on a screen with touch function, wherein the trigger device (4) outputs the recording start signal when there is a determined geographic match between the positions of the motor vehicle (2) and of the selected, locationally fixed region of interest.

11. Method according to Claim 10, wherein the trigger device (4) additionally triggers the recording start signal in dependence on the direction of travel and/or the orientation angle of the motor vehicle (2).

## Revendications

1. Dispositif de véhicule (1) permettant d'enregistrer une zone environnante d'un véhicule automobile (2), comprenant
un moyen d'entrée qui présente un écran à fonction tactile, le moyen d'entrée étant réalisé pour afficher une carte électronique à l'écran et pour la sélection par un passager du véhicule d'une zone d'intérêt localisée à enregistrer,
une unité de caméra (3) pour capter au moins une image de la zone environnante, et
un moyen de déclenchement (4) pour sortir un signal de début d'enregistrement afin de déclencher l'enregistrement d'au moins une image captée par l'unité de caméra (3),
le moyen de déclenchement (4) étant réalisé pour associer la sortie du signal de début d'enregistrement à une position géographique de la zone d'intérêt localisée sélectionnée, et
le moyen de déclenchement (4) étant réalisé pour sortir le signal de début d'enregistrement dans le cas d'une concordance géographique établie entre les positions du véhicule automobile (2) et de la zone d'intérêt localisée sélectionnée.

2. Dispositif de véhicule (1) selon la revendication 1, dans lequel ladite au moins une image enregistrée est stockée sur un support de stockage (9).

3. Dispositif de véhicule (1) selon l'une quelconque des revendications précédentes, dans lequel la zone d'intérêt localisée sélectionnée est un site touristique, une zone de circulation à risque d'accident, une zone de circulation à risque d'embouteillage et/ou une zone de chantier temporaire.

4. Dispositif de véhicule (1) selon l'une quelconque des revendications précédentes, dans lequel le moyen de déclenchement (4) est réalisé pour déclencher le signal de début d'enregistrement en fonction du sens de la marche établi du véhicule automobile (2) sur une chaussée.

5. Dispositif de véhicule (1) selon l'une quelconque des revendications précédentes, dans lequel le moyen de déclenchement (4) est réalisé pour déclencher le signal de début d'enregistrement en fonction d'un angle de position établi du véhicule automobile (2) par rapport à la zone d'intérêt reconnue, située le long d'un tracé de chaussée à venir.

6. Dispositif de véhicule (1) selon l'une quelconque des revendications précédentes, dans lequel, dans le cas d'un instant de déclenchement retardé pour l'enregistrement de la zone d'intérêt localisée sélectionnée, le moyen de déclenchement (4) est réalisé pour déclencher le signal de début d'enregistrement dans le cas d'une approche géographique établie entre les positions du véhicule automobile (2) et de la même zone d'intérêt localisée sélectionnée.

7. Véhicule automobile (2) comprenant le dispositif de véhicule (1) selon l'une quelconque des revendications précédentes.

8. Véhicule automobile (2) selon la revendication 7, comprenant un dispositif d'assistance au conducteur (7) pour assister le conducteur du véhicule automobile (2), le dispositif d'assistance au conducteur (7) étant réalisé pour évaluer à partir de ladite au moins une image enregistrée au moins une cible, et pour mettre en œuvre au moins une fonction d'assistance au conducteur en fonction de ladite au moins une cible.

9. Véhicule automobile (2) selon la revendication 8, dans lequel le dispositif d'assistance au conducteur (7) est réalisé pour transmettre ladite au moins une cible évaluée à un dispositif d'assistance au conducteur (7) d'autres véhicules automobiles (10), en particulier suivants, et/ou à un serveur central de données (8) externe au véhicule.

10. Procédé permettant d'enregistrer une zone environnante d'un véhicule automobile (2), dans lequel un moyen de déclenchement (4) pour déclencher l'enregistrement d'au moins une image captée par une unité de caméra (3) sort un signal de début d'enregistrement, le moyen de déclenchement (4) associant la sortie du signal de début d'enregistrement à une position géographique d'une zone d'intérêt localisée, sélectionnée par un passager du véhicule sur une carte électronique sur un écran à fonction tactile, le moyen de déclenchement (4) sortant le signal de début d'enregistrement dans le cas d'une concordance géographique établie entre les positions du véhicule automobile (2) et de la zone d'intérêt localisée sélectionnée.

11. Procédé selon la revendication 10, dans lequel le moyen de déclenchement (4) déclenche le signal de début d'enregistrement de plus en fonction du sens de la marche et/ou de l'angle de position du véhicule automobile (2).
